# EUROPÄISCHE PATENTSCHRIFT

(11) **EP 1 430 994 B1**
(45) Veröffentlichungstag und Bekanntmachung des Hinweises auf die Patenterteilung: **11.05.2005**
(21) Anmeldenummer: 03104232.8
(22) Anmeldetag: 17.11.2003
(51) Int. Cl.: B23Q 11/00, B23Q 11/10

(54) **Vorrichtung zum Transport von Spänen**
Device for conveying chips
Dispositif de transport de copeaux

(30) Priorität: 19.12.2002 DE 10260122
(43) Veröffentlichungstag der Anmeldung: 23.06.2004
(73) Patentinhaber: MANN+HUMMEL GmbH, 71638 Ludwigsburg (DE)
(72) Erfinder: Goth, Gerhard, 71726 Benningen (DE); Kempeneers, Bert, 3740 Bilzen (BE)

(56) Entgegenhaltungen:
- DE-U- 20 201 367
- US-A- 3 375 776
- US-A1- 2002 158 030

## Beschreibung

### Stand der Technik

Die Erfindung betrifft eine Vorrichtung zur Transportierung von Spänen gemäß dem Oberbegriff des Patentanspruches 1 (siehe z.B. DE-U-20201367). Außerdem betrifft die Erfindung ein Verfahren zur Steuerung der Vorrichtung gemäß Patentanspruch 10.

Es ist bekannt, dass bei spanabhebenden Bearbeitungsverfahren die Späne über Förderbänder aus der Zerspanungsvorrichtung transportiert werden. Die Späne werden von jeder einzelnen Zerspanungsvorrichtung in einen Spänekübel transportiert. Dieser Spänekübel wird dann von einem Mitarbeiter manuell mit einem Spänefahrzeug zu einer Spänehalde transportiert und entleert. Der entleerte Behälter wird anschließend wieder zu der Zerspanungsvorrichtung gebracht und die neu anfallenden Späne können wieder in den Spänekübel transportiert werden. In der Zerspanungsvorrichtung werden Flüssigkeiten wie z.B. Emulsionen oder Öle auf das zu zerspanende Werkstück aufgebracht um das Werkstück bzw. die Schneiden zu kühlen. An den abgetragenen Spänen haften noch Flüssigkeitsreste an, welche mit den Spänen aus der Zerspanungsvorrichtung ausgetragen werden. Durch den Austrag der anhaftenden Flüssigkeitstropfen aus der Zerspanungsvorrichtung werden so einige 100 Liter pro Jahr und Maschine entsorgt. Die Späne müssen als Sondermüll entsorgt werden und die aus der Zerspanungsvorrichtung ausgetragenen Flüssigkeiten müssen teuer durch neue ersetzt werden.

Aufgabe der Erfindung ist somit die Schaffung einer Vorrichtung zur Transportierung von Spänen einer Zerspanungsvorrichtung, bei welcher die zur Zerspanung erforderlichen Flüssigkeiten eines Zerspanvorganges, weiteren Zerpanungsvorgängen zugeführt werden können. Diese Aufgabe wird durch die Merkmale des Patentanspruches 1, sowie des Patentanspruches 10 gelöst.

### Vorteile der Erfindung

Die erfindungsgemäße Vorrichtung dient zur Transportierung von Spänen einer Zerspanungsvorrichtung, insbesondere aus der Produktionshalle. Die Zerspanungsvorrichtung ist eine Vorrichtung, bei welcher von einem Werkstück oder Bauteil Späne abgetragen werden. Die Späne können sehr kurz, als Partikel wie z.B. bei Schleifmaschinen bzw. Hohnmaschinen, oder lang, als Spiralspan wie z.B. bei Bohr-, Dreh- oder Fräsmaschinen, abgetragen werden. Von anderen spanabhebende Werkzeugmaschinen können die Späne selbstverständlich auch mit der erfindungsgemäßen Vorrichtung abtransportiert werden. Beim Abtragen der Späne wird eine Flüssigkeit verwendet, um die Werkzeuge und/ oder die Werkstücke zu kühlen. Weiterhin können die Späne durch die verwendete Flüssigkeit aus der Zerspanungsvorrichtung gespült werden. Die verwendeten Flüssigkeiten können z.B. Wasser, Schneidöle oder Kühlschmiermittel sein, wobei selbstverständlich auch andere, als die genannten Flüssigkeiten verwendet werden können. Die Auswahl der zu verwendenden Flüssigkeit ist in Abhängigkeit des zu zerspanenden Materials zu wählen.

Die erfindungsgemäße Vorrichtung weist einen Späneaufnahmebehälter auf, in welchen die von der Zerspanungsvorrichtung erzeugten Späne transportiert werden. Der Transport der Späne aus der Zerspanungsvorrichtung in den Späneaufnahmebehälter kann z.B. mit einem Kratzband erfolgen. Für Späne, die eine maximale Transport-Größe bzw. Länge überschreiten, kann vor dem Späneaufnahmebehälter ein Spänebrecher angeordnet sein, welcher die Späne auf eine transportfähige Größe zerkleinert. Der Späneaufnahmebehälter weist eine Späneeintrittsöffnung auf, welche im oberen Bereich des Späneaufnahmebehälters angeordnet ist. Durch diese Späneeintrittsöffnung können die aus der Zerspanungsvorrichtung transportierten mit einer Flüssigkeit benetzten Späne in den Späneaufnahmebehälter eingefüllt werden. Im unteren Bereich des Spänebehälters ist eine Flüssigkeitsaustrittsöffnung angeordnet, welche mit einer Flüssigkeitsableitung korrespondierend verbunden ist. Weiterhin verfügt der Späneaufnahmebehälter über eine Späneaustrittsöffnung, welche korrespondierend mit einer Späneableitung verbunden ist. Über die Flüssigkeitsableitung kann die von den Spänen abgeschiedene Flüssigkeit, z.B. drucklos aus dem Späneaufnahmebehälter entfernt werden. Hierbei können je nach Bedarf zwischen der Flüssigkeitsableitung und dem Späneaufnahmebehälter diverse Bauteile wie z.B. Drucksensoren oder Filter angeordnet sein. Auch zwischen dem Späneaufnahmebehälter und der Späneableitung können, falls erforderlich, diverse Bauteile, wie z.B. Schieber oder Sensoren angeordnet sein.

Zwischen der Späneeintrittsöffnung und der Flüssigkeitsaustrittsöffnung ist ein, für die abgeschiedene Flüssigkeit durchlässiges Sieb angeordnet. Das Sieb bewirkt, dass die Späne nicht zu der Flüssigkeitsaustrittsöffnung gelangen können. Bei einem groben Sieb werden nur größere Späne zurückgehalten und kleinere Späne mit der Flüssigkeit hindurch gelassen. Bei einem feinen Sieb werden auch kleinere Späne zurückgehalten und die abgeschiedene Flüssigkeit ist nahezu frei von Spänen. Entsprechend der erforderlichen Spänefreiheit der abgeschiedenen Flüssigkeit ist das Sieb gröber oder feiner auszulegen. Die an den Spänen anhaftende Flüssigkeit tropft nach unten durch das Sieb ab und kann so weiterverwendet werden.

Die erfindungsgemäße Vorrichtung zur Transportierung von Spänen verfügt weiterhin über mindestens eine Pumpe, welche über die Späneableitung korrespondierend mit dem Späneaufnahmebehälter verbunden ist und eine Steuerung. Hierbei ist die Pumpe, welche z.B. als Seitenkanalverdichter, Drehkolbenpumpe oder Drehschieberpumpe ausgebildet sein kann, durch die Steuerung ein- und ausschaltbar. Die Pumpe saugt bzw. drückt die entfeuchteten Späne aus dem Späneaufnahmebehälter durch die Späneableitung zu einer entfernt gelegenen Spänehalde, wo die Späne zur Entsorgung bzw. zum Recycling gesammelt werden. Diese Spänehalde kann auch weiter entfernt angeordnet sein. Auf dem Transportweg der Späne zu der Spänehalde gehen keine Späne "verloren", wie bei dem manuellen Spänetransport. Dadurch werden die Hallenböden, in welchen die Zerspanungsvorrichtungen aufgestellt sind, nicht verunreinigt. Weiterhin entfällt der "Entsorgungsverkehr" durch die Mitarbeiter mit den Spänefahrzeugen. Dadurch sind die Transportwege sauber und frei für den Transport der Werkstücke. Entsprechend den in der Steuerung hinterlegten Vorgaben kann die Pumpe z.B. in Abhängigkeit von Zeitintervallen oder Betriebszuständen von der Zerspanungsvorrichtung eingeschaltet werden. Die Steuerung ist als SPS frei programmierbar ausgeführt, wodurch sie an die Anforderung der einzelnen Kunden angepasst werden kann.

Weiterhin verfügt die erfindungsgemäße Vorrichtung über ein Spänefördergerät, welches zwischen der Späneableitung und der Pumpe angeordnet ist. In das Spänefördergerät wird das Luft-Spänegemisch eingebracht, wobei in dem Spänefördergerät eine Trennung der Luft von den Spänen erfolgt. Das Spänefördergerät transportiert die entfeuchteten Späne dann zu einer weiter entfernten Spänehalde. In dem Spänefördergerät kann z.B. ein Rüttler angeordnet sein, welcher die Späne auflockert, bzw. von den Wänden des Spänefördergerätes kratzt, wodurch ein Austrag der Späne aus dem Spänefördergerät gewährleistet ist. Das Spänefördergerät verfügt über eine Austragsklappe, welche nur dann geöffnet wird, wenn die Späne ausgetragen werden sollen. Sonst ist die Austragsklappe geschlossen, wodurch in dem Spänefördergerät ein Unterdruck aufgebaut werden kann.

Gemäß einer weiteren Ausgestaltung der erfindungsgemäßen Vorrichtung zur Transportierung von Spänen ist die Flüssigkeitsableitung korrespondierend mit einer Absaugpumpe verbunden. Durch die Anordnung einer Absaugpumpe in der Flüssigkeitsableitung kann die abgeschiedene Flüssigkeit auch entgegen der Schwerkraft aus dem Späneaufnahmebehälter entfernt werden. Eine weitere Möglichkeit der Nutzung der Absaugpumpe besteht darin, dass die Absaugpumpe Luft durch die Späne in dem Späneaufnahmebehälter saugt. Durch die Luftströmung werden die an den Spänen anhaftenden Flüssigkeitströpfchen in Richtung der Flüssigkeitsableitung transportiert und so von den Spänen getrennt, wodurch eine bessere Trocknung der Späne erzielt wird.

Eine vorteilhafte Weiterbildung der Erfindung sieht vor, dass zwischen der Absaugpumpe und der Flüssigkeitsableitung ein Flüssigkeitsabscheider angeordnet ist, wodurch die Abgeschiedene Flüssigkeit nicht mit der Absaugpumpe in Kontakt kommt und diese nicht beschädigen kann, bzw. die mit Flüssigkeit angereicherte Luft nicht in die Umgebung abgegeben wird. Die entfeuchtete Luft kann anschließend wieder in die Umgebung abgegeben oder für weitere Prozesse genutzt werden. Der Flüssigkeitsabscheider ist bei vorteilhaften Ausgestaltungen als Zyklonabscheider ausgebildet, welcher über einen zylindrischen Körper mit einer tangentialen Anströmung verfügt. Durch die tangentiale Anströmung wird die in den Flüssigkeitsabscheider einströmende Luft in eine Rotation versetzt. Durch die Massenträgheit werden die in der Luft enthaltenen Flüssigkeitströpfchen nach außen geschleudert und scheiden sich an der Wand des Zyklons ab. Die abgeschiedene Flüssigkeit läuft nach unten ab und kann über einen Auslass aus dem Flüssigkeitsabscheider entfernt werden um der Zerspanung erneut zugeführt zu werden. Bei weitere Ausgestaltungen ist der Flüssigkeitsabscheider als Zentrifuge oder Tellerseparator ausgebildet.

Gemäß einer vorteilhaften Ausgestaltung der Erfindung ist die mit der Späneableitung verbundene Pumpe identisch mit der in der Flüssigkeitsableitung angeordneten Absaugpumpe. Durch entsprechende Ausgestaltungen der Flüssigkeitsableitung und der Späneableitung kann eine einzige Pumpe an beide Leitungen angeschlossen sein, wodurch die Kosten für eine zweite Pumpe entfallen.

Eine Weiterbildung der Erfindung sieht vor, dass in der Flüssigkeitsableitung ein Flüssigkeitsförderungsventil und/oder in der Späneableitung ein Späneförderungsventil angeordnet ist, welches durch die Steuerung öffen- und schließbar ist. Da das Flüssigkeitsförderungsventil von der Steuerung nur bei bestimmten Betriebszuständen bzw. Bedingungen geöffnet wird, kann die Flüssigkeit nur bei diesen definierten Zuständen durch die Flüssigkeitsableitung strömen. Bei einem geschlossenen Flüssigkeitsförderungsventil kann keine Flüssigkeit durch die Flüssigkeitsableitung strömen. In gleicher Weise wirkt das Späneförderungsventil, welches ebenfalls in Abhängigkeit der definierten Betriebszustände bzw. Bedingungen einen Abtransport der Späne aus dem Späneaufnahmebehälter zulässt. Bei einer vorteilhaften Schaltung des Späneförderungsventiles und des Flüssigkeitsförderungsventils ist immer nur ein Ventil geöffnet, wodurch die volle Pumpenleistung auf die jeweils geöffnete Leitung, entweder die Späneableitung oder die Flüssigkeitsableitung, wirkt. Wenn beide Ventile geschlossen sind, kann auch die Pumpe abgeschaltet werden.

Es ist vorteilhaft, dass zwischen der Pumpe und dem Spänefördergerät ein Filter angeordnet ist, wodurch die Pumpe vor Verunreinigungen wie z.B. Staub oder Flüssigkeitsreste geschützt ist. Derartige Filter können z.B. als Tuchfilter aus einem Polyesternadelfilz oder als Filterpatronen ausgeführt sein. Der Filter kann auch als Sicherheitsfilter eingesetzt werden, damit die Pumpe nicht mit den Spänen bzw. der Flüssigkeit in Kontakt kommt, falls eine vorgeschaltete Reinigung der Luft defekt ist.

Gemäß einer vorteilhaften Ausgestaltung ist in dem Späneaufnahmebehälter ein Füllstandssensor angeordnet, welcher korrespondierend mit der Steuerung verbunden ist. Der Füllstandssensor erfasst die Menge der in dem Späneaufnahmebehälter enthalten Späne und erfasst so den Füllstand. Der Füllstandssensor kann z.B. als Drucksensor ausgebildet sein, welcher das Gewicht der in dem Späneaufnahmebehälter enthaltenen Späne erfasst. Bei einer anderen Ausgestaltung erfasst der Füllstandsensor die axiale Füllmenge in dem Späneaufnahmebehälter. Die Pumpe kann in Abhängigkeit des, durch den Füllstandssensor ermittelten Füllstands ein- bzw.- ausgeschaltet werden, somit wird die Pumpe nur dann betätigt, wenn eine ausreichende Menge an Spänen in dem Späneaufnahmebehälter vorhanden ist.

Eine Weiterbildung der Erfindung sieht vor, dass in dem Späneaufnahmebehälter ein Rührstern angeordnet ist. Der Rührstem ist derart ausgebildet, dass er die in dem Späneaufnahmebehälter enthaltenen Späne bewegen kann. Hierbei kann ein Durchmischen der Späne sinnvoll sein, um eine optimale Trocknung der Späne durch die durchströmende Luft zu erzielen. Der Rührstern kann jedoch auch dazu genutzt werden, dass der Späneableitung über die Späneaustrittsöffnung eine ausreichende Menge an Spänen zugeführt wird. Der Rührstern ist Vorteilhafterweise über die Steuerung steuerbar, wodurch dieser entsprechen der Betriebszustände der übrigen Bauteile ein- bzw. ausschaltbar ist und die jeweils erforderliche Drehfrequenz eingestellt werden kann.

Das erfindungsgemäße Verfahren zur Steuerung der oben beschriebenen Vorrichtung saugt mit einer Pumpe die in dem Späneaufnahmebehälter enthaltenen Späne über die Späneableitung ab und führt sie einer Spänehalde zu. Die Absaugung der Späne erfolgt erst nach einer ausreichenden Entfeuchtung der Späne. Die in dem Späneaufnahmebehälter abgeschiedene Flüssigkeit wird über die Flüssigkeitsableitung einer Weiterverwendung zugeführt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen schematischen Aufbau einer Vorrichtung zur Transportierung von Spänen,
- Figur 2: einen weiteren schematischen Aufbau einer Vorrichtung zur Transportierung von Spänen,
- Figur 3 und 3a: eine schematische Darstellung einer Vorrichtung zur Transportierung von Spänen, und
- Figur 4: einen Rührstem in schematischer Darstellung.

### Beschreibung der Ausführungsbeispiele

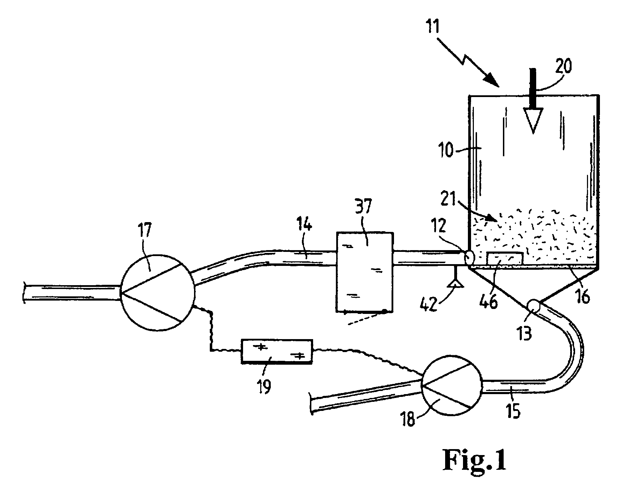

In Figur 1 ist ein schematischer Aufbau einer Vorrichtung zur Transportierung von Spänen dargestellt. Die Vorrichtung verfügt über einen zylindrisch ausgebildeten Späneaufnahmebehälter 10, welcher in seinem oberen Bereich eine Späneeintrittsöffnung 11 besitzt. Weiterhin besitzt der Späneaufnahmebehälter 10 eine Späneaustrittsöffnung 12 und eine Flüssigkeitsaustrittsöffnung 13. An die Späneaustrittsöffnung 12 schließt eine Späneableitung 14 an, durch welche die Späne aus dem Späneaufnahmebehälter 10 abtransportiert werden können. An die Flüssigkeitsaustrittsöffnung 13 schließt eine Flüssigkeitsableitung 15 an, durch welche die von den Spänen abgeschiedene Flüssigkeit aus dem Späneaufnahmebehälter 10 abtransportiert werden kann. Zwischen der Späneeintrittsöffnung 11 und der Flüssigkeitsaustrittsöffnung 13 ist ein Sieb 16 angeordnet, welches verhindert, dass Späne in die Flüssigkeitsableitung 15 gelangen. Das Sieb 16 ist bei diesem Ausführungsbeispiel geringfügig unterhalb der Späneaustrittsöffnung 12 angeordnet, wodurch die Späne sich auf der Höhe der Späneaustrittsöffnung 12 sammeln und durch eine, in der Späneableitung 14 angeordnete Pumpe 17 abgesaugt werden können. In der Flüssigkeitsableitung 15 ist eine Absaugpumpe 18 angeordnet, welche die abgeschiedene Flüssigkeit aus dem Späneaufnahmebehälter 10 absaugt. Die beiden Pumpen 17, 18 sind mit einer Steuerung 19 verbunden, welche die Pumpen 17, 18 entsprechend ein- bzw. ausschaltet. In der Späneableitung 14 ist ein Spänefördergerät 37 angeordnet, in welchem die Späne aus dem Luft-Spänegemisch abgetrennt werden. Weiterhin ist ein Förderdruckregulierventil 42 in der Späneableitung 14 bzw. nahe der Späneaustrittsöffnung 12 angeordnet. Durch das Förderdruckregulierventil 42 kann Luft aus der Umgebung zu der Späneaustrittsöffnung 12 strömen, welche dann die Späne aus dem Späneaufnahmebehälter 10 in die Späneableitung 14 fördert. Durch diese Luftzuführung wird eine Strömungsgeschwindigkeit in der Späneableitung 14 erzeugt, welche den Spänetransport ermöglicht. Dass vor der Späneaustrittsöffnung 12 eine ausreichende bzw. zur Transportierung geeignete Menge Späne verfügbar ist, kann mit einem Schieber 46 gewährleistet werden.

Die von einer Zerspanungsvorrichtung erzeugten, mit Flüssigkeit getränkten Späne 21 werden in den Späneaufnahmebehälter 10 entsprechend Pfeil 20 eingebracht. Sie fallen auf das Sieb 16. Die Absaugpumpe 18 saugt Luft an, welche durch die aufgeschütteten Späne 21 strömt. Durch die Strömungsgeschwindigkeit der Luft werden die Flüssigkeitströpfchen von den Spänen 21 mitgerissen und durch die Flüssigkeitsableitung 15 aus dem Späneaufnahmebehälter 10 entfernt. Das Luft-Flüssigkeitsgemisch wird anschließend der Zerspanung erneut zugeführt. Wenn die Späne 21 ausreichend getrocknet sind, schaltet die Steuerung 19 die Absaugpumpe 18 ab. Anschließend wird die Pumpe 17 in der Späneableitung 14 eingeschaltet, wodurch die entfeuchteten Späne 21 aus dem Späneaufnahmebehälter 10 gesaugt und in das Spänefördergerät 37 transportiert werden. Damit die Späne in die Späneableitung 14 gesaugt werden können, wird über das Förderdruckregulierventil 42 Luft zugeführt, welche den Ansaugbereich der Späneableitung 14, insbesondere in der Nähe der Späneaustrittsöffnung 12 durchströmt und durch eine Strömungsumlenkung die Späne mit in die Späneableitung 14 saugt. Wenn eine ausreichende Menge Späne aus dem Späneaufnahmebehälter 10 entfernt und in das Spänefördergerät 37 transportiert wurde, schaltet die Steuerung 19 die Pumpe 17 wieder ab und das Spänefördergerät 37 öffnet eine Austragsklappe im Bodenbereich. Das in dem Spänefördergerät 37 erzeugte Vakuum wird aufgehoben und die Späne ausgetragen. Wie lange die jeweiligen Pumpen 17, 18 eingeschaltet werden, kann durch z.B. ein Zeitfenster in der Steuerung 19 definiert sein.

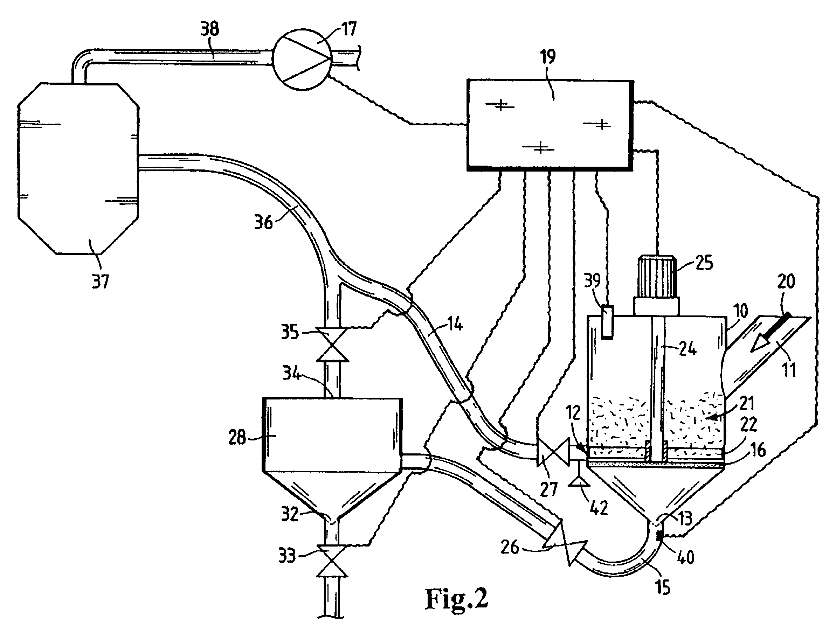

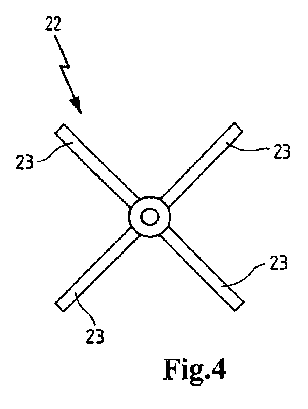

In Figur 2 ist eine weitere Ausgestaltung der Vorrichtung schematisch dargestellt. Der Figur 1 entsprechende Bauteile sind mit gleichen Bezugszeichen versehen. Bei diesem Ausführungsbeispiel ist die Späneeintrittsöffnung 11 im oberen Mantelflächenbereich des Späneaufnahmebehälter 10 angeordnet, wobei die Späne 21 über eine "Rutsche" in das Innere des Späneaufnahmebehälter 10 gelangen. Oberhalb des Siebes 16 ist ein Rührstern 22 angeordnet, welcher gemäß Figur 4 über mehrere gerade Flügel 23 verfügt. Bei anderen Ausgestaltungen können die Flügel 23 auch gebogen ausgeführt sein oder einzelne Segmente aufweisen, welche eine zur Absaugung geeignete Menge Späne vor die Späneaustrittsöffnung 12 transportieren. Der Rührstern 22 ist über eine Welle 24 mit einem Motor 25 verbunden. Der Motor 25 verfügt über eine Verbindung zur Steuerung 19, wodurch er ein- bzw. ausgeschaltet werden kann. In der Flüssigkeitsableitung 15 ist ein Flüssigkeitsförderungsventil 26 angeordnet, welches mit der Steuerung 19 korrespondierend verbunden ist. In der Späneableitung 14 ist ein Späneförderungsventil 27 angeordnet, welches korrespondierend mit der Steuerung 19 verbunden ist. Die korrespondierende Verbindung des Flüssigkeitsförderungsventils 26 und des Späneförderungsventils 27 kann direkt über eine Kabelverbindung oder Infrarot-Schnittstelle erfolgen. Es ist jedoch auch möglich, dass die korrespondierende Verbindung indirekt über Zwischenbauteile wie z.B. Verstärker oder Motoren erfolgt. Die Flüssigkeitsableitung 15 mündet ist einen Flüssigkeitsabscheider 28, welcher als Zentrifuge ausgebildet ist. Der Aufbau von Zentrifugen, welche über einen Rotationskörper verfügen, der Flüssigkeiten und sonstige Verunreinigungen aus Gasen durch Fliehkräfte abscheidet, ist allgemein bekannt. Der Flüssigkeitsabscheider verfügt über eine Verbindung zur Flüssigkeitsableitung 15, einen Auslass 32 und einen Luftauslass 34. Durch die Verbindung zur Flüssigkeitsableitung 15 tritt das Luft-Flüssigkeitsgemisch in die Zentrifuge ein, wird dort durch den Rotationskörper rotativ bewegt, wobei sich die schwereren Flüssigkeitstropfen abscheiden und dann durch den Auslass 32 ablaufen. Die gereinigte Luft tritt durch den Luftauslass 34 aus der Zentrifuge aus. Dieser Auslass 32 kann mit einem Ventil 33 geöffnet oder verschlossen werden, wobei das Ventil mit der Steuerung 19 korrespondierend verbunden ist. Das Ventil 33 kann auch als Rückschlagventil ausgebildet sein, um zu verhindern, dass Flüssigkeit zurückgespult und in die Förderleitung gelangt. Im oberen Bereich des Flüssigkeitsabscheiders 28 ist ein Luftauslass 34 angeordnet, welcher mit einem Luftventil 35 öffen- und verschließbar ist.

Die Späneableitung 14 mündet nach dem Luftventil 35 in eine Förderleitung 36, wobei der Übergang zwischen der Späneableitung 14 und der Förderleitung 36 derart gestaltet ist, dass die transprortierten Späne keine abrupten Richtungsänderungen erfahren, sondern in strömungsoptimierten Kurven transportiert werden. Dadurch wird verhindert, dass es in den Leitungen 14, 36 zu einem zu großen Verschleiß kommt, bzw. dass sich Späne ablagern und ein Verstopfen der Leitungen 14, 36 verursachen. Die Förderleitung 36 führt zu einem Spänefördergerät 37, welches die Späne abscheidet und einer Spänehalde (nicht dargestellt) zuführt. Im oberen Bereich des Spänefördergerätes 37 ist eine Anschlussleitung 38 angeordnet, welche das Spänefördergerät mit der Pumpe 17 verbindet. Die Pumpe 17 ist mit der Steuerung 19 derart verbunden, dass das Ein- bzw. Ausschalten der Pumpe 17 durch die Steuerung 19 steuerbar ist. Weiterhin ist die Steuerung 19 mit einem Füllstandssensor 39 verbunden, dessen Signale in der Steuerung 19 verarbeitet und zum Ein- bzw. Ausschalten der Pumpe 17 und des Rührsterns 22 und zum Öffnen- bzw. Schließen der Ventile 26, 27, 33 ,35 genutzt wird.

Wenn von einer Zerspanungsvorrichtung Späne produziert werden, fallen die Späne über die Späneeintrittsöffnung 11 in Pfeilrichtung 20 in den Späneaufnahmebehälter 10 und lagern sich auf dem Sieb 16 ab. Der Füllstandssensor 39 erkennt, dass Späne 21 in dem Späneaufnahmebehälter 10 sind und meldet diesen Zustand an die Steuerung 19. Die Steuerung 19 gibt einen Impuls zum Öffnen des Flüssigkeitsförderungsventil 26, des Luftventils 35. Weiterhin gibt die Steuerung 19 den Befehl, dass die Pumpe 17 eingeschaltet wird. Die Pumpe 17 erzeugt einen Unterdruck und saugt Luft durch die Anschlussleitung 38, das Späneförderungsgerät 37, die Förderleitung 36, den Flüssigkeitsabscheider 28, dessen Auslass 32 verschlossen ist, und die Flüssigkeitsableitung 15. Der Unterdruck in den genannten Bauteilen setzt sich also bis zu dem Späneaufnahmebehälter 10 fort. In dem Späneaufnahmebehälter 10 wird Luft durch die Späne 21 gesaugt, wodurch die anhaftenden Flüssigkeitströpfchen mit dem Luftstrom mitgerissen werden. Wenn die Späne 21 ausreichend getrocknet sind, schaltet die Steuerung 19 das Flüssigkeitsförderungsventil 26 und das Luftventil 35 auf Geschlossen, wodurch keine Luft mehr diesen Strömungsweg nehmen kann. Der Zeitpunkt, wann von der Flüssigkeitsabsaugung auf die Späneabsaugung umgeschaltet werden soll, kann in Abhängigkeit eines definierten Zeitintervalls erfolgen. Gleichzeitig mit dem Schließen der Ventile 26, 35 gibt die Steuerung 19 das Signal zum Öffnen des Späneförderungsventils 27 und zum Rotieren des Rührsterns 22. Die Pumpe 17 saugt weiter, wobei jedoch durch die Späneableitung 14 die Späne 21 aus dem Späneaufnahmebehälter 10 gesaugt werden. Um einen ausreichenden Luftdurchsatz für die Absaugung der Späne zu gewährleisten, strömt Luft durch das Förderdruckregulierventil 42 hindurch zu der Späneaustrittsöffnung 12 und transportiert die Späne in die Späneableitung 14. Je nachdem, welche Späne transportiert werden sollen, ist eine geringere oder größere Förderluftmenge erforderlich. Diese Förderluftmenge kann durch das Förderdruckregulierventil 42 eingestellt werden. Ohne die Zuführung der Förderluft, würde sich ein Unterdruck bis in den Späneaufnahmebehälter 10 aufbauen. Der Unterdruck kann bis zur maximalen Pumpenleistung aufgebaut werden. In diesem Zustand erfolgt dann jedoch keine Luftströmung mehr und somit keine Förderung der Späne.

Damit immer genug Späne vor der Späneaustrittsöffnung 12 vorhanden sind, schiebt der Rührstern 22 die Späne vor die Späneaustrittsöffnung 12. Die Späne werden zuerst durch die Späneableitung 14 und dann durch die Förderleitung 36 gesaugt, bevor sie in das Spänefördergerät 37 gelangen. Somit wird die Förderleitung einmal nur mit Luft und das andere Mal von einem Luft-Spänegemisch durchströmt. Wenn der Füllstandssensor 39 einen Füllstand unter der definierten Mindestfüllhöhe erfasst, sendet er an die Steuerung 19 ein entsprechendes Signal. Die Steuerung 19 schaltet die Pumpe 17 und den Motor 25 des Rührsterns 22 ab. Weiterhin wird das Späneförderungsventil 27 geschlossen.

Die in dem Flüssigkeitsabscheider 28 abgeschiedene Flüssigkeit wird durch ein Öffnen des Ventils 33 abgelassen und der Zerspanung erneut zugeführt.

Zum Erfassen, wann die Steuerung 19 von der Flüssigkeitsabsaugung auf die Späneabsaugung umschalten soll, kann ein Feuchtigkeitssensor 40 in der Flüssigkeitsableitung 15 angeordnet sein. Sobald dann der Flüssigkeitsgehalt der vorbeiströmenden Luft einen definierten Schwellenwert unterschreitet, also keine Feuchtigkeit mehr in dem Luftstrom messbar ist, erhält die Steuerung 19 von dem Feuchtigkeitssensor 40 ein entsprechendes Signal, wodurch die Umschaltung von Flüssigkeitsabsaugung auf Späneabsaugung umgeschaltet wird.

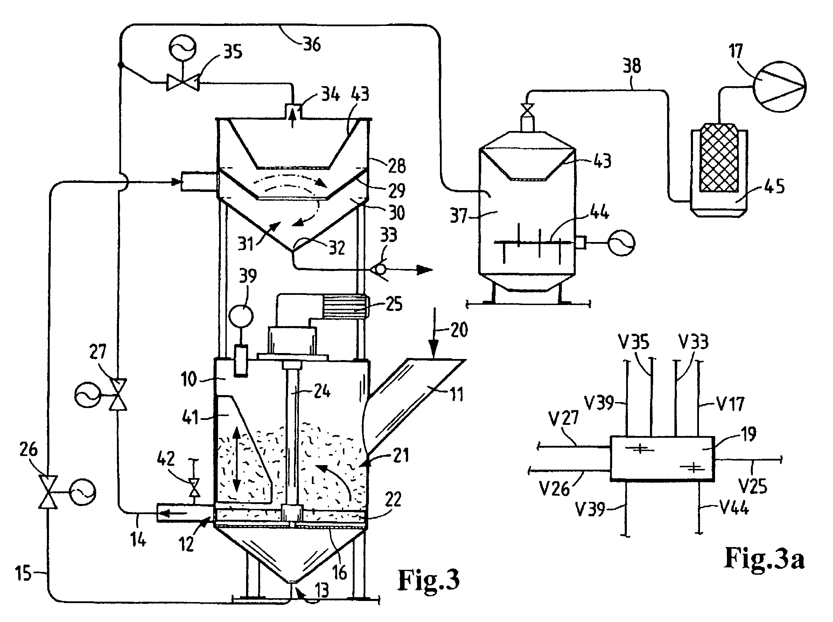

In Figur 3 ist eine Vorrichtung zur Transportierung von Spänen schematisch dargestellt. Der Figur 1 bzw. 2 entsprechende Bauteile sind mit gleichen Bezugszeichen versehen. Bei diesem Ausführungsbeispiel ist in dem Späneaufnahmebehälter 10 ein axial einstellbarer Absaugschieber 41 angeordnet, der die Spaltbreite vor der Späneaustrittsöffnung 12 derart einstellt, dass der Rührstern 22 nur soviel Späne vor die Späneaustrittsöffnung transportieren kann, dass der Späneabtransport optimal funktioniert. Hierbei ist die Spaltbreite abhängig von den zu transportierenden Spänen, wobei die Spaltbreite bei kleineren Spänen kleiner und bei größeren Spänen größer gewählt werden muss. Die durch die Spaltbreite begrenzte Füllhöhe der Späne vor der Späneaustrittsöffnung 12 entspricht bei besonderen Ausgestaltungen der halben Späneaustrittsöffnung 12. Der Absaugschieber 41 überdeckt den Bereich vor der Späneaustrittsöffnung 12, so dass keine Späne unkontrolliert durch z.B. die Späneeintrittsöffnung 11 in den Bereich vor der Späneaustrittsöffnung 12 gelangen und diese verstopfen. Das in der Späneableitung 14 angeordnete Förderdruckregulierventil 42 reguliert, wie in den Figuren 1 und 2 beschrieben, den aufgebrachten Förderdruck, so dass eine kontinuierliche Späneförderung in der Späneableitung 14 ermöglicht ist. Die Ventile 26, 27, 35, 33 sind über die Verbindungen V26, V27, V35, V33 mit der Steuerung 19 verbunden. Weiterhin ist der Motor 25 über die Verbindung V25 und der Füllstandssensor 39 über die Verbindung V39 korrespondierend mit der Steuerung 19 verbunden. Die Verbindungen sind jeweils nur schematisch in Figur 3a angedeutet, um die Darstellung nicht unnötig zu verkomplizieren.

Die Flüssigkeitsableitung 15 mündet tangential in einen zylindrischen Flüssigkeitsabscheider 28, welcher als Zyklon aufgebaut ist. In dem Flüssigkeitsabscheider 28 ist ein Abscheideblech 29 derart angeordnet, dass ein Ringspalt 30 gebildet wird. In dem Abscheideblech 29 ist mittig eine Öffnung 31 angeordnet, durch welche die entfeuchtete Luft abströmen kann. Der Flüssigkeitsabscheider 28 verfügt in seinem unteren Bereich über einen Auslass 32, durch welchen die Flüssigkeit aus dem Flüssigkeitsabscheider 28 austreten kann. In dem Flüssigkeitsabscheider 28 ist zwischen der Öffnung 31 und dem Luftauslass 34 ein Tuchfilter 43 angeordnet, welcher die feinen, durch den zyklonartigen Flüssigkeitsabscheider 28 nicht abgeschiedenen Flüssigkeitströpfchen zurückhält. In gleicher Weise ist auch in dem Spänefördergerät 37 ein Tuchfilter 43, angeordnet, welcher Flüssigkeitsreste, aber auch kleinere Schmutzpartikel oder Spanteile die in der Späneförderluft enthalten sind, zurückhalten. Die Förderluft in der Späneableitung 14 strömt mit einer höheren Geschwindigkeit als die transportierten Späne. Dadurch werden die Flüssigkeitsreste, welche noch an den Spänen anhaften, aber auch kleinere Schmutzpartikel oder Spanteile mit der Förderluft mitgerissen. Diese Verunreinigungen scheiden sich an dem Tuchfilter 43 ab. Damit die Tuchfilter 43 keinen dicken Filterkuchen aufbauen, werden die Tuchfilter 43 regelmäßig abgereinigt. Dies erfolgt vorteilhafter weise mit Gegendruck, was ein "Ausschüttlen" des Tuchfilters 43 bewirkt.

In dem Spänefördergerät 37 ist ein Rüttler 44 angeordnet, welcher die Späne lockert bzw. von der Wand des Spänefördergerätes 37 löst, um sie aus dem Spänefördergerät 37 auszutragen. Der Rüttler 44 ist über eine Verbindung V44 mit der Steuerung 19 verbunden, so dass er nur dann eingeschaltet wird, wenn auch tatsächlich Späne in das Spänefördergerät 37 eingebracht werden. Zwischen der Pumpe 17 und dem Spänefördergerät 37 ist ein Nachfilter 45 angeordnet, welcher die aus dem Spänefördergerät 37 kommende Luft von Verunreinigungen wie z.B. Staub befreit. Hierbei können auch noch Flüssigkeitsreste abgeschieden werden. Weiterhin kann der Nachfilter 45 auch als Sicherheitsfilter dienen, welcher Verunreinigungen, welche durch defekte Vorreinigungsstufen wie z.B. die Tuchfilter hindurch gelangt sind, zurück hält. Durch die gereinigte Luft wird eine Verunreinigung der Pumpe 17 vermieden.

## Patentansprüche

1. Vorrichtung zur Transportierung von Spänen einer Zerspanungsvorrichtung, aufweisend einen Späneaufnahmebehälter (10), eine Flüssigkeitsableitung (15), eine Späneableitung (14), eine Pumpe (17), ein Spänefördergerät (37) und eine Steuerung (19),
- wobei der Späneaufnahmebehälter (10) über eine Späneeintrittsöffnung (11), eine Späneaustrittsöffnung (12) und eine Flüssigkeitsaustrittsöffnung (13) verfügt, und wobei zwischen der Späneeintrittsöffnung (11) und der Flüssigkeitsaustrittsöffnung (13) ein Sieb (16) angeordnet ist,
- wobei die Flüssigkeitsableitung (15) über die Flüssigkeitsaustrittsöffnung (13) korrespondierend mit dem Späneaufnahmebehälter (10) verbunden ist,
- wobei die Späneableitung (14) über die Späneaustrittsöffnung (12) korrespondierend mit dem Späneaufnahmebehälter (10) verbunden ist, **dadurch gekennzeichnet, daß**
- die Pumpe (17) über die Späneableitung (14) mit dem Späneaufnahmebehälter (10) korrespondierend verbunden ist und durch die Steuerung (19) ein- und ausschaltbar ist, und
- das Spänefördergerät (37) zwischen der Späneableitung (14) und der Pumpe (17) angeordnet ist.

2. Vorrichtung zur Transportierung von Spänen einer Zerspanungsvorrichtung nach Anspruch 1, **dadurch gekennzeichnet, dass** die Flüssigkeitsableitung (15) korrespondierend mit einer Absaugpumpe (18) verbunden ist.

3. Vorrichtung zur Transportierung von Spänen einer Zerspanungsvorrichtung nach Anspruch 2, **dadurch gekennzeichnet, dass** zwischen der Absaugpumpe (18) und der Flüssigkeitsableitung (15) ein Flüssigkeitsabscheider (28) angeordnet ist.

4. Vorrichtung zur Transportierung von Spänen einer Zerspanungsvorrichtung nach Anspruch 2 oder 3, **dadurch gekennzeichnet, dass** die mit der Späneableitung (14) verbundene Pumpe (17) identisch ist mit der Absaugpumpe (18).

5. Vorrichtung zur Transportierung von Spänen einer Zerspanungsvorrichtung nach einem der vorangehenden Ansprüchen, **dadurch gekennzeichnet, dass** in der Flüssigkeitsableitung (15) ein Flüssigkeitsförderungsventil (26) angeordnet ist, welches durch die Steuerung (19) öffen- und schließbar ist.

6. Vorrichtung zur Transportierung von Spänen einer Zerspanungsvorrichtung nach einem der vorangehenden Ansprüche, **dadurch gekennzeichnet, dass** in der Späneableitung (14) ein Späneförderungsventil (27) angeordnet ist, welches durch die Steuerung (19) öffen- und schließbar ist.

7. Vorrichtung zur Transportierung von Spänen einer Zerspanungsvorrichtung nach einem der vorangehenden Ansprüche, **dadurch gekennzeichnet, dass** zwischen der Pumpe (17) und dem Spänefördergerät (37) ein Filter (45) angeordnet ist.

8. Vorrichtung nach einem der vorangehenden Ansprüche, **dadurch gekennzeichnet, dass** in dem Späneaufnahmebehälter (10) ein Füllstandssensor (39) angeordnet ist, welcher korrespondierend mit der Steuerung (19) verbunden ist, wobei die Pumpe (17) in Abhängigkeit des, durch den Füllstandssensors (39) ermittelten Füllstand einbzw.- ausschaltbar ist.

9. Vorrichtung nach einem der vorhergehenden Ansprüche, **dadurch gekennzeichnet, dass** in dem Späneaufnahmebehälter (10) ein Rührstem (22) angeordnet ist, welcher, insbesondere über die Steuerung (19), derart steuerbar ist, dass der Späneableitung (14) über die Späneaustrittsöffnung (12) eine ausreichende Menge an Spänen zuführbar ist.

10. Verfahren zur Steuerung einer Vorrichtung gemäß einem der vorangehenden Ansprüche, **dadurch gekennzeichnet, dass** die Pumpe (17) über die Späneableitung (14) die in dem Späneaufnahmebehälter (10) enthaltenen Späne absaugt und einer Spänehalde zuführt, wobei die Späneabsaugung nach einer ausreichenden Entfeuchtung der Späne erfolgt und wobei die in dem Späneaufnahmebehälter (10) abgeschiedene Flüssigkeit über die Flüssigkeitsableitung (15) einer Weiterverwendung zugeführt wird.

## Claims

1. Apparatus for the conveying of shavings from a machine-cutting apparatus, said apparatus for the conveying of shavings including a shavings receiving container (10), a liquid outlet duct (15), a shavings outlet duct (14), a pump (17), a shavings conveying device (37) and a controlling means (19).
- wherein the shavings receiving container (10) has a shavings inlet opening (11), a shavings outlet opening (12) and a liquid outlet opening (13), and wherein a screen (16) is disposed between the shavings inlet opening (11) and the liquid outlet opening (13),
- wherein the liquid outlet duct (15) is connected in a corresponding manner to the shavings receiving container (10) via the liquid outlet opening (13),
- wherein the shavings outlet duct (14) is connected in a corresponding manner to the shavings receiving container (10) via the shavings outlet opening (12), **characterised in that**
- the pump (17) is connected in a corresponding manner to the shavings receiving container (10) via the shavings outlet duct (14) and is switchable on and off by means of the controlling means (19), and
- the shavings conveying device (37) is disposed between the shavings outlst duct (14) and the pump (17).

2. Apparatus for the conveying of shavings from a machine-cutting apparatus according to claim 1, **characterised in that** the liquid outlet duct (15) is connected in a corresponding manner to a suction pump (18).

3. Apparatus for the conveying of shavings from a machine-cutting apparatus according to claim 2, **characterised in that** a liquid separating means (28) is disposed between the suction pump (18) and the liquid outlet duct (15).

4. Apparatus for the conveying of shavings from a machine-cutting apparatus according to claim 2 or 3, **characterised in that** the pump (17) that is connected to the shavings outlet duct (14) is identical to the suction pump (18).

5. Apparatus for the conveying of shavings from a machine-cutting apparatus according to one of the preceding claims, **characterised in that** a liquid conveying valve (26) is disposed in the liquid outlet duct (15), said liquid conveying valve is openable and closable by means of the controlling means (19).

6. Apparatus for the conveying of shavings from a machine-cutting apparatus according to one of the preceding claims, **characterised in that** a shavings conveying valve (27) is disposed in the shavings outlet duct (14), said shavings conveying valve is openable and closable by means of the controlling means (19).

7. Apparatus for the conveying of shavings from a machine-cutting apparatus according to one of the preceding claims, **characterised in that** a filter (45) is disposed between the pump (17) and the shavings conveying device (37).

8. Apparatus according to one of the preceding claims, **characterised in that** a level sensor (39) is disposed in the shavings receiving container (10), said level sensor is connected in a corresponding manner to the controlling means (19), wherein the pump (17) is switchable on or respectively off in dependence on the level determined by the level sensor (39).

9. Apparatus according to one of the preceding claims, **characterised in that** an agitating star (22) is disposed in the shavings receiving container (10), said agitating star is controllable, more especially by means of the controlling means (19), in such a manner that a sufficient amount of shavings is suppliable to shavings outlet duct (14) via the shavings outlet opening (12).

10. Method for controlling an apparatus according to the preceding claims, **characterised in that** the pump (17) sucks out the shavings contained in the snavings receiving container (10) via the shavings outlet duct (14) and supplies them to a shavings dump, wherein the extraction of the shavings is effected once they have been sufficiently dehumidified and wherein the liquid separated in the shavings receiving container (10) is supplied to a further processing means via the liquid outlet duct (15).

## Revendications

1. Dispositif de transport de copeaux d'un dispositif d'usinage par enlèvement de copeaux, présentant un récipient (10) collecteur de copeaux, une conduite (15) d'évacuation de liquide, une conduite (14) d'évacuation de copeaux, une pompe (17), un appareil (37) de transport de copeaux et une commande (19),
- sachant que le récipient (10) collecteur de copeaux dispose d'une ouverture (11) d'entrée de copeaux, d'une ouverture (12) de sortie de copeaux et d'une ouverture (13) de sortie de liquide, et sachant qu'un crible (16) est disposé entre l'ouverture (11) d'entrée de copeaux et l'ouverture (13) de sortie de liquide,
- sachant que la conduite (15) d'évacuation de liquide communique avec le récipient (10) collecteur de copeaux par l'intermédiaire de l'ouverture (13) de sortie de liquide,
- sachant que la conduite (14) d'évacuation de copeaux communique avec le récipient (10) collecteur de copeaux par l'intermédiaire de l'ouverture (12) de sortie de copeaux,
**caractérisé en ce que**
- la pompe (17) communique avec le récipient (10) collecteur de copeaux par l'intermédiaire de la conduite (14) d'évacuation de copeaux et peut être activée et désactivée par la commande (19), et
- l'appareil (37) de transport de copeaux est disposé entre la conduite (14) d'évacuation de copeaux et la pompe (17).

2. Dispositif de transport de copeaux d'un dispositif d'usinage par enlèvement de copeaux selon la revendication 1, **caractérisé en ce que** la conduite (15) d'évacuation de liquide communique avec une pompe d'aspiration (18).

3. Dispositif de transport de copeaux d'un dispositif d'usinage par enlèvement de copeaux selon la revendication 2, **caractérisé en ce qu'**un séparateur de liquide (28) est disposé entre la pompe d'aspiration (18) et la conduite (15) d'évacuation de liquide.

4. Dispositif de transport de copeaux d'un dispositif d'usinage par enlèvement de copeaux selon la revendication 2 ou 3, **caractérisé en ce que** la pompe (17) reliée à la conduite (14) d'évacuation de copeaux est identique à la pompe d'aspiration (18).

5. Dispositif de transport de copeaux d'un dispositif d'usinage par enlèvement de copeaux selon l'une des revendications précédentes, **caractérisé en ce qu'**une soupape (26) de circulation de liquide, qui peut être ouverte et fermée par la commande (19), est disposée dans la conduite (15) d'évacuation de liquide.

6. Dispositif de transport de copeaux d'un dispositif d'usinage par enlèvement de copeaux selon l'une des revendications précédentes, **caractérisé en ce qu'**une soupape (27) de circulation de copeaux, qui peut être ouverte et fermée par la commande (19), est disposée dans la conduite (14) d'évacuation de copeaux.

7. Dispositif de transport de copeaux d'un dispositif d'usinage par enlèvement de copeaux selon l'une des revendications précédentes, **caractérisé en ce qu'**un filtre (45) est disposé entre la pompe (17) et l'appareil (37) de transport de copeaux.

8. Dispositif selon l'une des revendications précédentes, **caractérisé en ce qu'**un capteur (39) de niveau de remplissage, qui communique avec la commande (19), est disposé dans le récipient (10) collecteur de copeaux, sachant que la pompe (17) peut être activée ou désactivée en fonction du niveau de remplissage déterminé par le capteur (39) de niveau de remplissage.

9. Dispositif selon l'une des revendications précédentes, **caractérisé en ce qu'**un agitateur en étoile (22) est disposé dans le récipient (10) collecteur de copeaux, agitateur qui peut être commandé, notamment au moyen de la commande (19), de telle sorte qu'une quantité suffisante de copeaux peut être apportée à la conduite (14) d'évacuation de copeaux par l'intermédiaire de l'ouverture (12) de sortie de copeaux.

10. Procédé de commande d'un dispositif selon l'une des revendications précédentes, **caractérisé en ce que** la pompe (17) aspire par l'intermédiaire de la conduite (14) d'évacuation de copeaux les copeaux contenus dans le récipient (10) collecteur de copeaux et les apporte à un dépôt de copeaux, sachant que l'aspiration des copeaux s'effectue après une déshumidification suffisante des copeaux et sachant que le liquide séparé dans le récipient (10) collecteur de copeaux peut être, par l'intermédiaire de la conduite (15) d'évacuation de liquide, apporté à un point de réutilisation.
